# EUROPÄISCHE PATENTSCHRIFT

(11) **EP 3 400 141 B1**
(45) Veröffentlichungstag und Bekanntmachung des Hinweises auf die Patenterteilung: **20.11.2019**
(21) Anmeldenummer: 16808643.7
(22) Anmeldetag: 08.12.2016
(51) Int. Cl.: B60G 3/28, B60G 7/00, B60G 7/02, B60G 3/20, B62D 7/20

(54) **RADAUFHÄNGUNG**
WHEEL SUSPENSION
SUSPENSION DE ROUE

(30) Priorität: 07.01.2016 DE 102016200095
(43) Veröffentlichungstag der Anmeldung: 14.11.2018
(73) Patentinhaber: ZF Friedrichshafen AG, 88046 Friedrichshafen (DE)
(72) Erfinder: HACKER, Clemens, 49080 Osnabrück (DE); SIDDIQUI, Sami Uddin, 49448 Lemförde (DE); FINKBEINER, Ewgeni, 49413 Dinklage (DE); MOELLER, Matthias, 32257 Bünde (DE)
(86) Internationale Anmeldenummer: PCT/EP2016/080214
(87) Internationale Veröffentlichungsnummer: WO 2017/118518

(56) Entgegenhaltungen:
- DE-A1-102010 012 014
- DE-A1-102012 011 865
- DE-A1-102013 211 535
- DE-C1- 3 714 034
- DE-T2- 3 875 336
- DE-T2- 69 735 117
- JP-A- S61 139 504
- US-A- 5 380 024
- US-A1- 2011 291 376

## Beschreibung

Die Erfindung betrifft eine Radaufhängung für ein Kraftfahrzeug gemäß dem Oberbegriff des Patentanspruchs 1. Eine solche Radaufhängung ist bereits aus den Schriften US 5 380 024 A sowie DE 37 14 034 C1 bekannt.

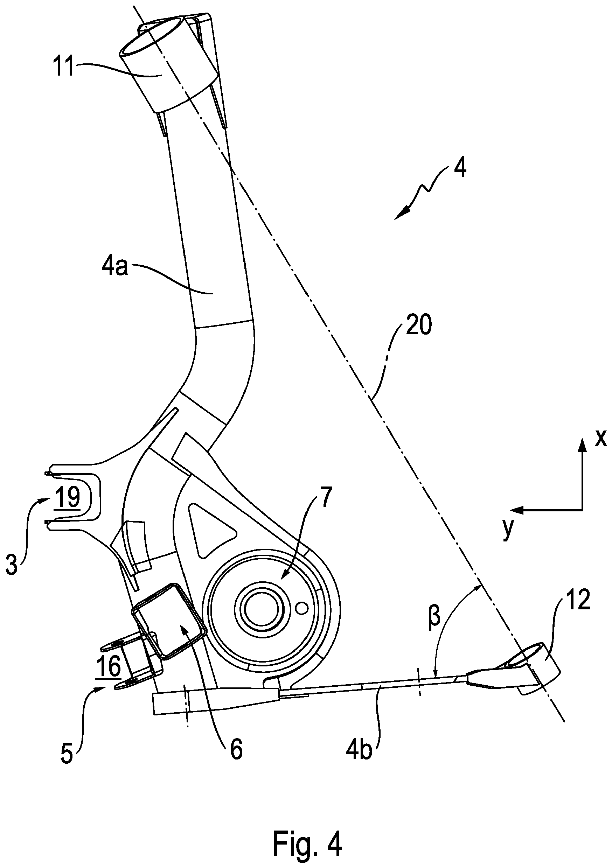

Radaufhängungen für Kraftfahrzeuge gemäß den Merkmalen des Oberbegriffs von Anspruch 1 sind aus dem Stand der Technik bekannt. Verwiesen sei in diesem Zusammenhang zunächst auf die DE 10 2013 211 535 A1, die eine lenkbare Hinterradaufhängung für ein Kraftfahrzeug offenbart. Die darin beschriebene Radaufhängung umfasst unter anderem einen radführenden Lenker, der einen Längslenkerbereich sowie einen Querlenkerbereich aufweist, wobei der Längslenkerbereich mit einem vorderen aufbauseitigem Lager und der Querlenkerbereich mit einem im Vergleich dazu weiter innen liegenden, hinteren aufbauseitigen Lager versehen ist. Der so gebildete im wesentlichen L-förmige radführende Lenker ist gegenüber dem Fahrzeugaufbau um eine Drehachse schwenkbar, welche durch das vordere aufbauseitige Lager und das hintere aufbauseitige Lager verläuft. Wie beispielsweise der dortigen Figur 4 zu entnehmen, ist der Querlenkerbereich des radführenden Lenkers als sogenannter "Schwertlenker" ausgeführt, an dessen zur Fahrzeugmitte weisendem Ende das hintere aufbauseitige Lager ausgebildet ist. Eine genauere Gestaltung dieses lediglich durch ein Loch dargestellten Lagers lässt sich der Schrift nicht entnehmen.

Weiterhin sei noch verwiesen auf die Schriften JP S61 139504 A, US 2011/291376 A1, DE 697 35 117 T2, DE 10 2012 011865 A1, DE 10 2010 012014 A1 sowie DE 38 75 336 T2, aus denen jeweils Radaufhängungen für Kraftfahrzeuge bekannt sind.

Es ist eine Aufgabe der vorliegenden Erfindung, eine Radaufhängung der eingangs genannten Art anzugeben, mit welcher sich einerseits ein hinreichender Längskomfort erzielen lässt und welche zudem eine geringe Nebenfederrate aufweist.

Die genannte Aufgabe wird gelöst durch eine Radaufhängung gemäß den Merkmalen des Patentanspruchs 1. Erfindungsgemäß wird damit eine Radaufhängung für ein Kraftfahrzeug beschrieben, die einen Radträger aufweist, der gegenüber einem radführenden Lenker schwenkbeweglich gelagert ist, indem der Radträger mit dem radführenden Lenker in einem ersten Verbindungsbereich unmittelbar und in einem zweiten Verbindungsbereich mittelbar über einen Integrallenker verbunden ist. Dabei umfasst der radführende Lenker einen Längslenkerbereich mit einem vorderen aufbauseitigen Lager und einen Querlenkerbereich mit einem hinteren aufbauseitigen Lager, wobei das hintere aufbauseitige Lager parallel zu einer durch die aufbauseitigen Lager verlaufenden Drehachse des radführenden Lenkers axial ausgerichtet ist. Die Radaufhängung zeichnet sich dadurch aus, dass die Achsen der Gelenke des Integrallenkers in Seitenansicht auf die Radaufhängung so ausgerichtet sind, dass diese sich in einem bezogen auf die Fahrzeuglängsrichtung vor der Radmitte liegenden Punkt schneiden.

Zur Erzielung eines hinreichenden Längskomforts ist es allgemein bekannt Längslenker aufbauseitig über ein Gummilager anzubinden, so dass der Längslenker zum Beispiel beim Bremsvorgang eine gewisse Nachgiebigkeit in Fahrzeuglängsrichtung gegenüber dem Fahrzeugaufbau aufweist. Zur Ermöglichung einer solchen Längsnachgiebigkeit ist beispielsweise bei der aus DE 10 2013 211 535 A1 bekannten Radaufhängung der Querlenkerbereich des radführenden Lenkers als in Fahrzeuglängsrichtung biegeweiches Blech (auch: "Schwertlenker") ausgebildet, so dass sich dieser beim Bremsen des Fahrzeugs in Fahrzeugslängsrichtung verformen kann. Indem zusätzlich der Längslenkerbereich über ein Gummilager aufbauseitig angebunden ist, ist - unter Verformung des Querlenkerbereichs - zumindest der Längslenkerbereich des radführenden Lenkers in Fahrzeuglängsrichtung zumindest geringfügig nachgiebig, was zur Erhöhung des Fahrkomforts des Fahrzeugs beiträgt. Erfindungsgemäß wurde als vorteilhaft erachtet, das hintere aufbauseitige Lager des Querlenkerbereichs axial derart auszurichten, das dieses parallel zu der Drehachse ist, welche durch das vordere aufbauseitige Lager des Längslenkerbereichs und das hintere aufbauseitige Lager des Querlenkerbereichs verläuft. In praktischer Hinsicht fällt die Lagerachse des hinteren aufbauseitigen Lagers, das heißt die Achse, bei welcher das Lager den geringsten Widerstand gegen eine Verdrehung aufbringt, mit der Drehachse des radführenden Lenkers zusammen. Ein Effekt dieser Anordnung ist, dass das hintere aufbauseitige Lager, welches gemäß einer vorteilhaften Weiterbildung der Erfindung als Elastomerlager ausgeführt ist, bei einer Einfederbewegung des radführenden Lenkers nur wenig beansprucht wird, so dass die Nebenfederrate (d.h. die Steifigkeit, welche einer Einfederbewegung des radführenden Lenkers ohne Berücksichtigung der Aufbaufedersteifigkeit entgegengesetzt wird) der Radaufhängung besonders gering ist. Dies liegt darin begründet, dass bei den Einfederbewegungen des radführenden Lenkers das hintere aufbauseitige Lager um seine Lagerachse - d.h. besonders widerstands- und verschleißarm - verdreht wird. Davon weitgehend unabhängig wird der Längskomfort der Radaufhängung auf vorteilhafte Weise durch eine elastische Verformbarkeit des Querlenkerbereichs des radführenden Lenkers gewährleistet. Die Nebenfederrate lässt sich somit ohne negativen Einfluss auf den Längskomfort gering halten.

Gemäß einer bevorzugten Weiterbildung der Radaufhängung ist der radführende Lenker im wesentlichen L-förmig ausgebildet, indem der Längslenkerbereich den längeren Schenkel und der Querlenkerbereich den dazu kürzeren Schenkel eines "L" bildet. Es sei darauf verwiesen, dass der Ausdruck im wesentlichen L-förmig in diesem Zusammenhang weit auszulegen ist, insbesondere ist darunter zu verstehen, dass Längslenkerbereich und Querlenkerbereich jeweils eine im wesentlichen längliche Erstreckung aufweisen und in einem annähernd rechten Winkel miteinander verbunden sind. Der Längslenkerbereich oder der Querlenkerbereich brauchen nicht notwendigerweise über deren gesamte Länge geradlinig verlaufen, sondern können beispielsweise bedingt durch Bauraumanforderungen auch von einer rein geradlinigen Form abweichen. Aufgrund der gesamt betrachtet annähernden L-Form des radführenden Lenkers lässt sich dieser auch als Trapezlenker bezeichnen.

Wie bereits ausgeführt, ist der Längslenkerbereich des radführenden Lenkers mit einem vorderen aufbauseitigen Lager versehen und ist der Querlenkerbereich mit einem hinteren aufbauseitigen Lager versehen. Gemäß einer bevorzugten konstruktiven Ausgestaltung ist das hintere aufbauseitige Lager des radführenden Lenkers bezogen auf eine Fahrzeugquerrichtung näher an der Fahrzeugmitte angeordnet als das vordere aufbauseitige Lager, wodurch sich insbesondere eine Anordnung ergibt, gemäß welcher die Drehachse des radführenden Lenkers gegenüber der Fahrzeuglängsrichtung um einen Winkel geneigt ist. In kinematischer Hinsicht handelt es sich bei dem radführenden Lenker damit um einen sogenannten "Schräglenker".

Indem zumindest das hintere aufbauseitige Lager, vorzugsweise auch das vordere aufbauseitige Lager, als Elastomerlager ausgeführt ist, bietet die Radaufhängung einen besonders hohen Fahrkomfort. Insbesondere die Ausführung des vorderen aufbauseitigen Lagers als Elastomerlager ermöglicht, dass der radführende Lenker in Fahrzeuglängsrichtung zumindest geringfügig gegenüber dem Fahrzeugaufbau beweglich (nachgiebig) ist. Neben der mechanischen Elastizität bewirkt die Verwendung von Elastomerlagern vorteilhaft eine akustische Entkopplung des radführenden Lenkers gegenüber dem Achsträger bzw. der Fahrzeugkarosserie.

Der radführende Lenker kann auf verschiedene Weisen fahrzeugaufbauseitig angebunden sein. Eine bevorzugte Weiterbildung der Erfindung sieht vor, dass der radführende Lenker über das hintere aufbauseitige Lager an einen Achsträger und über das vordere aufbauseitige Lager an die Fahrzeugkarosserie angebunden ist. Alternativ hierzu könnte auch das vordere aufbauseitige Lager an den Achsträger angebunden sein, wodurch sich die Montage der Radaufhängung als eine gesamte Baueinheit an die Fahrzeugkarosserie vereinfachen lässt. Eine Anbindung des vorderen aufbauseitigem Lagers direkt an die Fahrzeugkarosserie hat hingegen den Vorteil, dass der Achsträger kleiner ausgeführt werden kann, wobei möglicherweise bereits vorhandene Anbindungspunkte an die Fahrzeugkarosserie genutzt werden können. Dazu wiederum alternativ ist es denkbar, sowohl das hintere aufbauseitige Lager als auch das vordere aufbauseitige Lager direkt an die Fahrzeugkarrosserie anzubinden.

Zur Erzielung eines hinreichenden Längskomforts der Radaufhängung ist vorteilhaft vorgesehen, dass der Querlenkerbereich des radführenden Lenkers in Bezug auf die Fahrzeuglängsrichtung eine deutlich höhere Elastizität aufweist als in Fahrzeughochrichtung oder Fahrzeugquerrichtung. Dies lässt sich insbesondere erzielen, indem der Querlenkerbereich des radführenden Lenkers in Bauform eines in Fahrzeuglängsrichtung biegeweichen Blechs (auch: "Schwertlenker") ausgeführt ist.

Gemäß einer allgemeinen Gestaltung der Radaufhängung ist der Radträger gegenüber dem radführenden Lenker allgemein schwenkbeweglich gelagert. Die erfindungsgemäße Radaufhängung sieht weiterhin vor, dass der Radträger mit dem radführenden Lenker in einem ersten Verbindungsbereich unmittelbar, insbesondere über ein Kugelgelenk, und in einem zweiten Verbindungsbereich mittelbar über einen Integrallenker verbunden ist. Radträger und radführender Lenker sind also in zwei Verbindungsbereichen miteinander verbunden, wobei diese Verbindung im ersten Verbindungsbereich unmittelbar und im zweiten Verbindungsbereich mittelbar ausgestaltet ist. Im ersten Verbindungsbereich kommt beispielsweise ein Kugelgelenk oder Gummilager zum Einsatz, wodurch sich drei rotatorische Freiheitsgrade zwischen Radträger und radführendem Lenker verwirklichen lassen. Im zweiten Verbindungsbereich kommt ein Integrallenker zum Einsatz, wobei es sich insbesondere um ein Lenkerbauteil, beispielsweise einen Zweipunktlenker handelt, der einen Endes über ein Gelenk mit dem Radträger und anderen Endes über ein Gelenk mit dem radführenden Lenker verbunden ist. Bei entsprechender Gestaltung und Anordnung der Verbindungsbereiche lässt sich der Effekt erzielen, dass der Radträger gegenüber dem radführenden Lenker um eine virtuelle Lenkachse schwenkbar ist.

Zweckmäßigerweise sind die beiden Verbindungsbereiche dabei in Fahrzeuglängsrichtung voneinander beabstandet, wobei vorzugsweise einer der Bereiche vor der Radmitte und der andere hinter der Radmitte ausgebildet ist. Hiermit kann ein ausreichend großer Abstand zwischen dem ersten und zweiten Verbindungsbereich geschaffen werden, wodurch die auf den Integrallenker einwirkenden Stützkräfte reduziert werden können.

Die Radaufhängung kann besonders kompakt ausgebildet werden, wenn sich der Integrallenker im nicht ausgelenkten Zustand des Radträger im Wesentlichen in Fahrzeughochrichtung erstreckt. Daneben kann hierdurch ein annähernd gleich großer maximaler positiver beziehungsweise negativer Lenkwinkel erzielt werden.

Zur Erzielung einer möglichst geringen Nebenfederrate der Radaufhängung sind gemäß einer vorteilhaften Weiterbildung die Achsen der Gelenke des Integrallenkers in Draufsicht auf die Radaufhängung annähernd parallel zur Drehachse des radführenden Lenkers ausgerichtet.

Ebenfalls zur Reduzierung der Nebenfederrate sind erfindungsgemäß die Achsen der Gelenke des Integrallenkers in Seitenansicht auf die Radaufhängung so ausgerichtet, dass diese sich in einem bezogen auf die Fahrzeuglängsrichtung vor der Radmitte liegenden Punkt schneiden. Dabei ist die Achse des lenkerseitigen Gelenks des Integrallenkers in Seitenansicht auf die Radaufhängung bevorzugt etwa parallel zur Drehachse des radführenden Lenkers ausgerichtet.

Die beschriebene Ausrichtung der Gelenkachsen des Integrallenkers hat zur Folge, dass die Lager des Integrallenkers, bei welchen es sich vorzugsweise um Elastomerlager handelt, kardanisch kaum beansprucht werden, was ebenfalls zu einer Reduzierung der Nebenfederrate der Radaufhängung beiträgt. Zudem steigt damit die Lebensdauer der Elastomerlager. Weiterhin lässt sich das Fahrzeug aufgrund der geringeren Nebenfederrate besser abstimmen.

Zweckmäßigerweise ist der Radträger zusätzlich über einen Sturzlenker mit dem Achsträger und/oder der Karrosserie verbunden, wobei der Sturzlenker einer oberen Lenkerebene und der radführende Lenker einer dazu unteren Lenkerebene zugeordnet ist. Hierdurch kann die Radaufhängung insgesamt kompakt ausgeführt werden.

Zum Lenken des Radträger um eine Lenkachse ist es vorteilhaft, dass der Radaufhängung ein Lenkmittel zugeordnet ist, das vorzugsweise hinter der Radmitte gelenkig mit dem Radträger verbunden ist. Es kann sich hierbei grundsätzlich um verschiedenartige Lenkmittel handeln.

Gemäß einer bevorzugten Weiterbildung der Radaufhängung ist das Lenkmittel als Spurlenker ausgebildet, der sich zur aktiven Lenkung über einen Aktor betätigen lässt. Die Betätigung über einen Aktor bewirkt dann insbesondere eine translatorische Bewegung des Spurlenkers in Fahrzeugquerrichtung, um über die Bewegung des Spurlenkers am Radträger und somit am daran gelagerten Rad eine Lenkbewegung einzuleiten.

Alternativ ist es denkbar, dass das Lenkmittel als Spurstange zur passiven Lenkung über den Radhub ausgebildet ist. Hierdurch kann die Radaufhängung besonders kostengünstig ausgebildet werden.

Die Radaufhängung kann besonders kompakt ausgebildet werden, wenn das Lenkmittel insbesondere unmittelbar mit dem Radträger verbunden ist. Auf diese Weise kann durch unmittelbares Angreifen des Lenkmittels am Radträger eine besonders präzise Lenkung des Radträgers um die Lenkachse erfolgen. Vorteilhaft ist das Lenkmittel dabei hinter der Radmitte angeordnet, wodurch sich ausreichender Bauraum zum Antreiben der Räder ergibt. Alternativ kann das Lenkmittel auch mittelbar mit dem Radträger zusammenwirken, beispielsweise indem das Lenkmittel mit dem Integrallenker verbunden ist.

Indem der Querlenkerbereich des radführenden Lenkers bevorzugt hinter der Radmitte angeordnet ist, kann im Bereich der Radmitte hinreichender Bauraum für eventuelle Antriebsmittel geschaffen werden. Vorteilhaft erstreckt sich der Längslenkerbereich des radführenden Lenkers bis vor die Radmitte. Mittels des Längslenkerbereichs können insbesondere auftretende Brems- und Beschleunigungsmomente bzw. -kräfte abgestützt werden.

Die Erfindung wird nachfolgend anhand eines in der Zeichnung dargestellten Ausführungsbeispiels näher erläutert. Daraus ergeben sich auch weitere vorteilhafte Effekte der Erfindung. In der nachfolgenden Zeichnung zeigt:
- Figur 1: eine perspektivische Ansicht einer Radaufhängung gemäß dem einzigen Ausführungsbeispiel von schräg hinten,
- Figur 2: eine Draufsicht auf die Radaufhängung,
- Figur 3: eine Seitenansicht auf einen Bereich der Radaufhängung,
- Figur 4: eine Einzeldarstellung eines bei der Radaufhängung zum Einsatz kommenden radführenden Lenkers in Draufsicht.

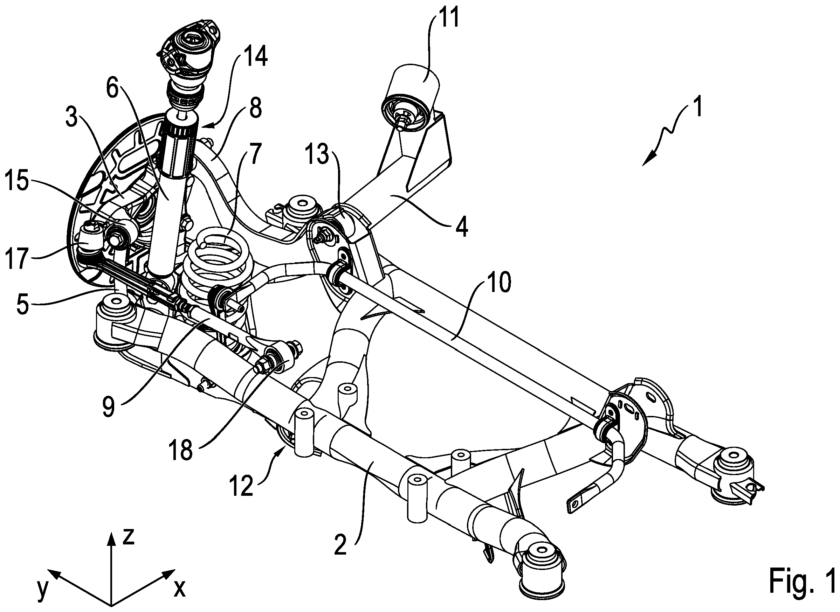

In den Figuren 1 bis 4 wird eine Radaufhängung 1 für ein Kraftfahrzeug gemäß dem einzigen Ausführungsbeispiel der vorliegenden Erfindung in verschiedenen Aspekten gezeigt und nachfolgend erläutert. Da die vier Figuren sich auf ein einziges Ausführungsbeispiel der Erfindung beziehen, werden mit gleichen Bezugszeichen in den Zeichnungen die gleichen Bauteile bezeichnet, so dass zu einem Bezugszeichen beziehungsweise korrespondierenden Bauteil gemachte Ausführungen gleichermaßen für sämtliche Figuren gelten und entsprechend nicht für jede Figur wiederholt werden. In sämtlichen Figuren ist durch Angabe eines Koordinatensystems die Orientierung definiert, wobei x der Fahrzeuglängsrichtung, y der Fahrzeugquerrichtung und z der Fahrzeughochrichtung entspricht.

Figur 1 zeigt eine an einen Achsträger 2 angebaute Radaufhängung 1 für ein Kraftfahrzeug, wobei aus Übersichtsgründen lediglich die - bezogen auf ein (nicht dargestelltes) Kraftfahrzeug - linksseitige Radaufhängung 1 angebaut ist. Der Achsträger 2, an welchen die Radaufhängung 1 angebaut ist, besteht im Wesentlichen aus vier miteinander verschweißten Rohren, von denen sich ein vorderes und ein hinteres Rohr im Wesentlichen in Fahrzeugquerrichtung erstrecken und die durch zwei im Vergleich dazu kürzere, sich im Wesentlichen in Fahrzeuglängsrichtung erstreckenden Rohren miteinander zu einem starren Rahmen verschweißt sind. An den äußeren Enden der sich in Fahrzeugquerrichtung erstreckenden Rohre befinden sich auf für sich übliche Weise vier Anbindungspunkte, mit denen sich der Achsträger 2 - auf wiederum für sich bekannte Weise - an eine (nicht dargestellte) Karosserie eines Kraftfahrzeugs anbauen lässt.

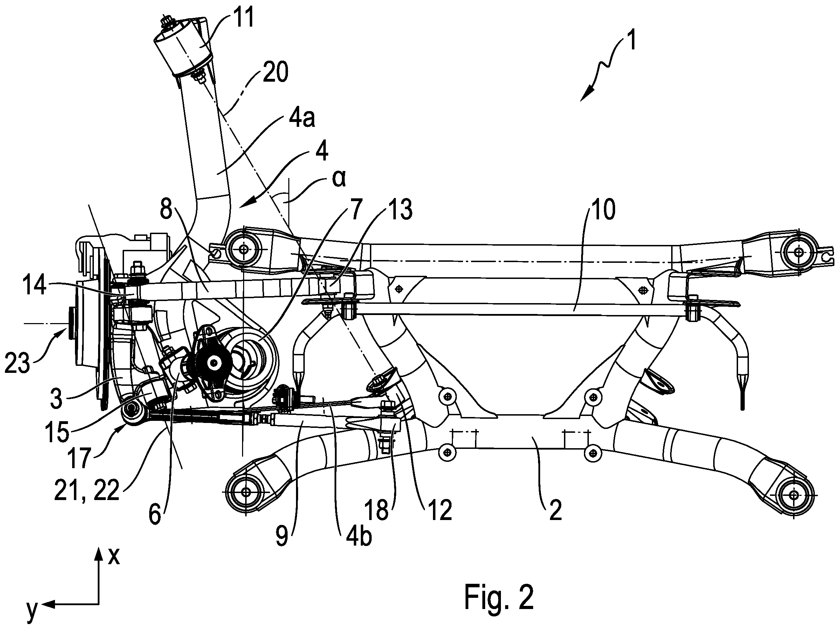

Die dargestellte Radaufhängung 1 weist einen Radträger 3 auf, der gegenüber einem radführenden Lenker 4 schwenkbeweglich gelagert ist. Bei dem radführenden Lenker 4 handelt es sich um ein im Wesentlichen L-förmig ausgebildetes Bauteil, das einen Längslenkerbereich 4a und einen Querlenkerbereich 4b aufweist. In diesem Zusammenhang sei auf Figur 4 verwiesen, welche den radführenden Lenker 4 in einer Einzeldarstellung in Draufsicht zeigt. Daraus geht hervor, dass der radführende Lenker 4 im Wesentlichen aus einem rohrförmigen Bauteil, welches dem Längslenkerbereich 4a bildet, und einem fest damit verbundenen schwertartigen Bauteil gebildet wird, das den Querlenkerbereich 4b bildet. Während der Längslenkerbereich 4a aufgrund seiner rohrförmigen Ausbildung besonders verwindungssteif ist, weist der Querlenkerbereich 4b insbesondere in Bezug auf die Fahrzeuglängsrichtung x eine vergleichsweise hohe Elastizität, somit Flexibilität auf. Während der radführende Lenker 4 insgesamt als ein im wesentlich L-förmiges Bauteil angesehen werden kann, bei dem der Längslenkerbereich 4a den längeren Schenkel und der Querlenkerbereich 4b den dazu kürzeren Schenkel eines "L" bildet, weist der Längslenkerbereich 4a trotz seiner im Wesentlichen länglichen Erstreckung eine leichte S-Form (aufeinanderfolgende Rechts- und Linkskrümmung) auf. Diese S-Form ermöglicht, dass eine Gelenkaufnahme 19 für den Radträger 3 besonders radnah (fahrzeugaußenseitig) angeordnet ist, wobei zugleich in einem weiter vorn (bezogen auf die Fahrzeuglängsrichtung x), nach innen gekrümmten Bereich ausreichender Raum für ein an den Radträger 3 montiertes Rad zur Verfügung steht. Bezogen auf die Fahrzeuglängsrichtung x weiter hinten liegend ist am Längslenkerbereich 4a, nahe des L-Winkels, eine Aufnahme für ein lenkerseitiges Gelenk 16 für eines noch zu erläuternden Integrallenkers 5 vorgesehen. Weiterhin befindet sich in diesem Teil des Längslenkerbereichs 4a eine untere Aufnahme für einen Dämpfer 6. In dem durch den rohrförmigen Längslenkerbereich 4a und den schwertartigen Querlenkerbereich 4b gebildeten L-Winkel ist weiterhin eine Aufnahmeplatte angeordnet, die zur unteren Abstützung einer Spiralfeder 7 (dargestellt in den Figuren 1 und 2) dient.

Wie weiterhin der Figur 4 zu entnehmen, weist der radführende Lenker 4 am vorderen Ende des Längslenkerbereichs 4a ein vorderes aufbauseitiges Lager 11 (in Figur 4 ist lediglich die Lageraufnahme zeichnerisch angedeutet) auf. Dieses vordere aufbauseitige Lager 11 ist als ein Elastomerlager ausgeführt, wobei dessen Lagerachse um einen Neigungswinkel α (vgl. Fig. 2) gegenüber der Fahrzeuglängsrichtung x geneigt ist, wie in Figur 2 dargestellt.

Wiederum Bezug nehmend auf Figur 4 lässt sich der dortigen Darstellung entnehmen, dass der radführende Lenker 4 an dessen zur Fahrzeuginnenseite weisendem Ende des Querlenkerbereichs 4b ein hinteres aufbauseitiges Lager 12 aufweist.

Auch dieses hintere aufbauseitige Lager 12 (in Fig. 4 ist lediglich die Lageraufnahme zeichnerisch angedeutet) ist als Elastomerlager ausgeführt. Auch das hintere aufbauseitige Lager 12 weist eine besondere axiale Ausrichtung auf, indem dieses parallel zu einer Drehachse 20 ausgerichtet ist, welche durch die Mitte des vorderen aufbauseitigen Lagers 11 und des hinteren aufbauseitigen Lagers 12 verläuft. Die Lagerachse des hinteren aufbauseitigen Lagers 12 steht somit nicht in einem rechten Winkel zur Haupterstreckungsrichtung des Querlenkerbereichs 4b, sondern schließt diesem gegenüber einen unter 90°liegenden Winkel β ein.

Wie Figur 2 zu entnehmen, ist der radführende Lenker 4 über das vordere aufbauseitige Lager 11 und das hintere aufbauseitige Lager 12 unmittelbar mit der Fahrzeugkarrosserie beziehungsweise dem Achsträger 2 (zusammenfassend Fahrzeugaufbau) verbunden. Folglich ist der radführende Lenker 4 gegenüber dem Fahrzeugaufbau um die Drehachse 20 schwenkbar, wodurch ein Einfedern des radführenden Lenkers 4 (mitsamt des damit verbundenen Radträgers 3) möglich ist. Da das hintere aufbauseitige Lager 12 des radführenden Lenkers 4 bezogen auf die Fahrzeugquerrichtung y näher an der Fahrzeugmitte angeordnet ist als das vordere aufbauseitige Lager 11, ist die Drehachse 20 des radführenden Lenkers 4 gegenüber der Fahrzeuglängsrichtung x um einen Winkel α geneigt.

Im hier beschriebenen Ausführungsbeispiel ist der radführende Lenker 4 über das hintere aufbauseitige Lager 12 an den Achsträger 2 angebunden, während das vordere aufbauseitige Lager 11 unmittelbar an die (nicht dargestellte) Fahrzeugkarosserie angebunden ist. Gemäß einer denkbaren alternativen Ausführungsform könnte der Achsträger auch so ausgeführt sein, dass auch das vordere aufbauseitige Lager 11 an den Achsträger angebunden ist. Die Kinematik der Lagerung des radführenden Lenkers 4 bliebe hiervon unbeeinflusst.

Wie bereits im Zusammenhang mit Figur 4 erwähnt, weist der Querlenkerbereich 4b des radführenden Lenkers 4 in Bezug auf die Fahrzeuglängsrichtung x eine deutlich höhere Elastizität auf als in Fahrzeughochrichtung z oder Fahrzeugquerrichtung y. Wie sich am besten den Figuren 2 und 4 entnehmen lässt, ist der Querlenkerbereich 4b des radführenden Lenkers 4 in Bauform eines "Schwerts" ausgeführt. Zudem weist das vordere aufbauseitige Lager 11 des radführenden Lenkers 4 eine Nachgiebigkeit in Richtung der Lagerachse (zusammenfallend mit Drehachse 20) auf. Die verhältnismäßig hohe Elastizität des Querlenkerbereichs 4b sowie die Längsnachgiebigkeit des vorderen aufbauseitigen Lagers 11 tragen dazu bei, dass der Längslenker 4 bei Stößen in Fahrzeuglängsrichtung - unter Verformung des Querlenkerbereichs 4b des radführenden Lenkers 4 - zumindest in gewissem Maße in Fahrzeuglängsrichtung beweglich ist, wodurch sich der Längskomfort der Radaufhängung 1 erhöht. Die beschriebene Ausrichtung des hinteren aufbauseitigen Lagers 12 gewährleistet dabei auf vorteilhafte Weise, dass der Querlenkerbereich 4b sowie der Elastomerkörper des Lagers 12 beim Ein- bzw. Ausfedern des radführenden Lenkers 4 nicht oder kaum verformt werden. Die betriebsbedingte Beanspruchung des Lagers 12 reduziert sich damit vorteilhaft und die Nebenfederrate der Radaufhängung 1 sinkt insgesamt. Aufgrund der weiterhin bestehenden Längsbeweglichkeit (Verformbarkeit des Längslenkerbereichs 4b) bleibt der Längskomfort der Radaufhängung 1 hoch.

Wie bereits zuvor erwähnt, ist der Radträger 3 gegenüber dem radführenden Lenker 4 schwenkbeweglich gelagert. Zu diesem Zweck ist im dargestellten Ausführungsbeispiel der Radaufhängung 1 der Radträger 3 mit dem radführenden Lenker 4 in zwei Verbindungsbereichen verbunden, so dass der Radträger 3 gegenüber dem radführenden Lenker 4 um eine virtuelle Lenkachse schwenkbar ist. Eine gedachte Verbindungslinie zwischen einer Gelenkaufnahme 19 und einem radträgerseitigen Gelenk 14 eines Sturzlenkers 8 stellt hierbei die virtuelle Lenkachse des Radträgers 3 dar.

Wie bereits im Zusammenhang mit Figur 4 erwähnt, ist am Längslenkerbereich 4a des radführenden Lenkers 4 eine Gelenkaufnahme 19 zur Aufnahme eines Kugelgelenks ausgebildet, das dazu dient, den Radträger 3 in diesem ersten Verbindungsbereich 19 kugelgelenkig mit dem radführenden Lenker 4 zu verbinden.

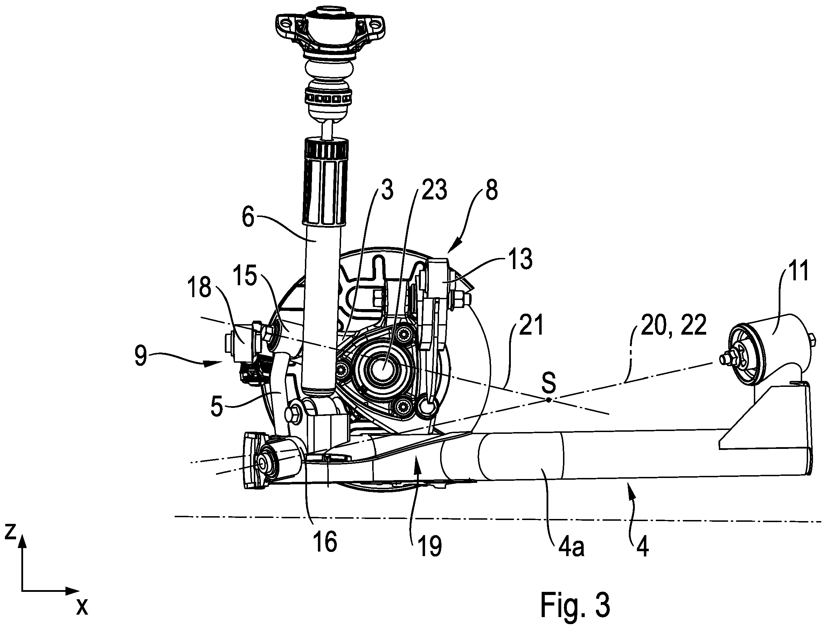

Aus Figur 3 lässt sich entnehmen, dass der Radträger 3 mit dem radführenden Lenker 4 zudem - in einem zweiten Verbindungsbereich - mittelbar über einen Integrallenker 5 verbunden ist. Der Integrallenker 5 ist als sogenannter Zweipunktlenker ausgeführt, wobei ein oberes Gelenk 15 mit dem Radträger 3 und ein unteres Ende über ein Gelenk 16 mit dem radführenden Lenker 4 verbunden ist. Der Integrallenker 15 weist eine im Wesentlichen längliche Erstreckung auf. Abweichend von einer reinen geraden Erstreckung ist der Integrallenker 5 jedoch in einem etwa mittigen Bereich leicht gekrümmt. Gemäß der Darstellung in Figur 3 sind die Achsen 21, 22 der Gelenke 15, 16 des Integrallenkers 5 in Seitenansicht auf die Radaufhängung 1 so ausgerichtet, dass diese sich in einem bezogen auf die Fahrzeuglängsrichtung X vor der Radmitte 23 liegenden Punkt S schneiden. Die Achse 22 des lenkerseitigen Gelenks 16 des Integrallenkers 5 verläuft in Seitenansicht auf die Radaufhängung 1 etwa parallel zur Drehachse 20 des radführenden Lenkers 4.

Gemäß der Darstellung von Figur 2 sind die Achsen 21, 22 der Gelenke 15, 16 des Integrallenkers 5 in Draufsicht auf die Radaufhängung 1 annähernd parallel zur Drehachse 20 des radführenden Lenkers 4 ausgerichtet. Durch diese Ausrichtung der Gelenkachsen des Integrallenkers wird eine weitere Verringerung der Nebenfederrate der Radaufhängung 1 erreicht, da die vorzugsweise zum Einsatz kommenden Elastomerlager des Integrallenkers kardanisch kaum beansprucht werden. Sowohl die Lebensdauer der Elastomerlager als auch der Fahrkomfort steigern sich dadurch. Zudem lässt sich ein mit der Radaufhängung 1 ausgestattetes Fahrzeug aufgrund der geringen Nebenfederrate besser abstimmen.

Die beiden (erster und zweiter) Verbindungsbereiche, in denen der Radträger mit dem radführenden Lenker verbunden ist, sind in Fahrzeuglängsrichtung x voneinander beabstandet, wie aus Figur 3 ersichtlich. Hierdurch wird eine Rotation des Radträgers 3 um die Radachse vermieden, wobei der im zweiten Verbindungsbereich angeordnete Integrallenker 5 als Stützelement dient. Der erste Verbindungsbereich 19 ist, wie Figur 3 entnehmbar, vor der Radmitte 23 angeordnet, während der durch den Integrallenker 5 gebildete zweite Verbindungsbereich hinter der Radmitte 23 - jeweils bezogen auf die Fahrzeuglängsrichtung X - angeordnet ist. Im nicht ausgelenkten Zustand des Radträgers 3 erstreckt sich der Integrallenker 5 im Wesentlichen in Fahrzeughochrichtung Z.

Wie am deutlichsten in den Figuren 1 und 2 zu sehen, ist der Radträger 3 zusätzlich über einen Sturzlenker 8 mit dem Achsträger 2 verbunden. Bei dem Sturzlenker 8 handelt es sich um einen Zweipunktlenker, der die Form eines abgeschwächten "C" aufweist. Ein zum Achsträger 2 weisendes Ende des Sturzlenkers 8 ist über ein aufbauseitiges Gelenk 13 mit dem Achsträger 2 gelenkig verbunden. Ein dem Radträger zugewandtes Ende des Sturzlenkers 8 ist über ein radträgerseitiges Gelenk 14 mit dem Radträger 3 gelenkig verbunden. Im Vergleich zum radführenden Lenker 4, welcher in einer gedachten unteren Lenkerebene angeordnet ist, lässt sich der Sturzlenker 8 einer dazu oberen Lenkerebene zuordnen.

Die beschriebene mittelbare und unmittelbare Kopplung des Radträgers an den radführenden Lenker 4 zusammen mit der Anbindung über den Sturzlenker 8 ermöglicht eine Schwenkbewegung des Radträgers 3 gegenüber dem radführenden Lenker 4 um eine virtuelle durch die Punkte 19 und 14 verlaufende Lenkachse. Bei Durchführung einer solchen Lenkbewegung schwenkt der Integrallenker 5 um die Achse 22 des lenkerseitigen Gelenks 16, wobei zur Steuerung dieser Lenkbewegung der Radaufhängung 1 ein Lenkmittel 9 zugeordnet ist. Im gezeigten Ausführungsbeispiel handelt es sich hierbei um einen Spurlenker 9, der sich zur aktiven Lenkung über einen (nicht näher dargestellten) Aktor betätigen lässt. Bei dem Spurlenker 9 handelt es sich um ein Zweipunktlenkerbauteil, das an seinem fahrzeugaußenseitigen Ende über ein hinter der Radmitte 23 angeordnetes Spurgelenk 17 gelenkig mit dem Radträger 3 verbunden ist. Alternativ könnte der Spurlenker 9 gemäß einer hier nicht dargestellten Abwandlung auch unmittelbar am Integrallenker 5, beabstandet von dessen lenkerseitigem Gelenk 16, angreifen.

Wie aus Figuren 1 und 2 ersichtlich, sind dem radführenden Lenker 4 eine Feder 7 und ein Dämpfer 6 zugeordnet. Diese erstrecken sich jeweils im Wesentlichen in Fahrzeughochrichtung z und stützen sich an deren jeweiligem unteren Ende gegenüber dem radführenden Lenker 4 ab. In Draufsicht auf die Radaufhängung 1 betrachtet, entsprechend Figur 2, sind die Feder 7 und der Dämpfer 6 angeordnet zwischen Achsträger 2, Sturzlenker 8, Radträger 3 und Spurlenker 9.

### Bezugszeichen

- 1: Radaufhängung
- 2: Achsträger
- 3: Radträger
- 4: radführender Lenker
- 4a: Längslenkerbereich
- 4b: Querlenkerbereich
- 5: Integrallenker
- 6: Dämpfer
- 7: Feder
- 8: Sturzlenker
- 9: Spurlenker
- 10: Stabilisator
- 11: vorderes Gelenk
- 12: hinteres Gelenk
- 13: aufbauseitiges Gelenk
- 14: radträgerseitiges Gelenk
- 15: radträgerseitiges Gelenk
- 16: lenkerseitiges Gelenk
- 17: Spurgelenk
- 18: inneres Gelenk
- 19: Gelenkaufnahme Radträger
- 20: Achse
- 21: Achse
- 22: Achse
- 23: Radmitte
- S: Schnittpunkt
- α, β: Neigungswinkel
- x: Fahrzeuglängsrichtung
- y: Fahrzeugquerrichtung
- z: Fahrzeughochrichtung

## Patentansprüche

1. Radaufhängung (1) für ein Kraftfahrzeug, mit einem Radträger (3), der gegenüber einem radführenden Lenker (4) schwenkbeweglich gelagert ist, indem der Radträger (3) mit dem radführenden Lenker (4) in einem ersten Verbindungsbereich (19) unmittelbar und in einem zweiten Verbindungsbereich mittelbar über einen Integrallenker (5, 15, 16) verbunden ist, wobei der radführende Lenker (4) einen Längslenkerbereich (4a) mit einem vorderen aufbauseitigen Lager (11) und einen Querlenkerbereich (4b) mit einem hinteren aufbauseitigen Lager (12) umfasst, wobei das hintere aufbauseitige Lager (12) parallel zu einer durch die aufbauseitigen Lager (11, 12) verlaufenden Drehachse (20) des radführenden Lenkers (4) axial ausgerichtet ist, daduch gekenzeichnet, dass die Achsen (21, 22) der Gelenke (15, 16) des Integrallenkers (5) in Seitenansicht auf die Radaufhängung (1) so ausgerichtet sind, dass diese sich in einem bezogen auf die Fahrzeuglängsrichtung (x) vor der Radmitte (23) liegenden Punkt (S) schneiden.

2. Radaufhängung nach Anspruch 1, **dadurch gekennzeichnet, dass** der radführende Lenker (4) im Wesentlichen L-förmig ausgebildet ist, indem der Längslenkerbereich (4a) den längeren Schenkel und der Querlenkerbereich (4b) den dazu kürzeren Schenkel eines "L" bildet.

3. Radaufhängung nach Anspruch 1 oder 2, **dadurch gekennzeichnet, dass** das hintere aufbauseitige Lager (12) des radführenden Lenkers (4) bezogen auf eine Fahrzeugquerrichtung (y) näher an der Fahrzeugmitte angeordnet ist als das vordere aufbauseitige Lager (11), so dass die Drehachse (20) des radführenden Lenkers (4) gegenüber der Fahrzeuglängsrichtung (x) um einen Winkel (α) geneigt ist.

4. Radaufhängung nach einem der vorigen Ansprüche, **dadurch gekennzeichnet, dass** zumindest das hintere aufbauseitige Lager (12), vorzugsweise auch das vordere aufbauseitige Lager (11), als Elastomerlager ausgeführt ist.

5. Radaufhängung nach einem der vorigen Ansprüche, **dadurch gekennzeichnet, dass** der radführende Lenker (4) über das hintere aufbauseitige Lager (12) an einen Achsträger (2) und über das vordere aufbauseitige Lager (11) an eine Fahrzeugkarosserie angebunden ist.

6. Radaufhängung nach einem der vorigen Ansprüche, **dadurch gekennzeichnet, dass** der Querlenkerbereich (4b) des radführenden Lenkers (4) in Bezug auf die Fahrzeuglängsrichtung (x) eine deutlich höhere Elastizität aufweist als in Fahrzeughochrichtung (z) oder Fahrzeugquerrichtung (y).

7. Radaufhängung nach einem der vorigen Ansprüche, **dadurch gekennzeichnet, dass** die beiden Verbindungsbereiche (19; 5, 15, 16) in Fahrzeuglängsrichtung (x) voneinander beabstandet sind, wobei vorzugsweise einer der Verbindungsbereiche vor der Radmitte (23) und der andere hinter der Radmitte (23) ausgebildet ist.

8. Radaufhängung nach einem der vorigen Ansprüche, **dadurch gekennzeichnet, dass** sich der Integrallenker (5) im nicht ausgelenkten Zustand des Radträgers (3) im Wesentlichen in Fahrzeughochrichtung (z) erstreckt.

9. Radaufhängung nach einem der vorigen Ansprüche, **dadurch gekennzeichnet, dass** der Integrallenker (5) einen Endes über ein Gelenk (15) mit dem Radträger (3) und anderen Endes über ein Gelenk (16) mit dem radführenden Lenker (4) verbunden ist.

10. Radaufhängung nach einem der vorigen Ansprüche, **dadurch gekennzeichnet, dass** die Achsen (21, 22) der Gelenke (15, 16) des Integrallenkers (5) in Draufsicht auf die Radaufhängung (1) annähernd parallel zur Drehachse (20) des radführenden Lenkers (4) ausgerichtet sind.

11. Radaufhängung nach einem der vorigen Ansprüche, **dadurch gekennzeichnet, dass** die Achse (22) des lenkerseitigen Gelenks (16) des Integrallenkers (5) in Seitenansicht auf die Radaufhängung (1) etwa parallel zur Drehachse (20) des radführenden Lenkers (4) ausgerichtet ist.

12. Radaufhängung nach einem der vorigen Ansprüche, **dadurch gekennzeichnet, dass** der Radträger (3) zusätzlich über einen Sturzlenker (8) mit dem Achsträger (2) und/oder der Karrosserie verbunden ist, wobei der Sturzlenker (8) einer oberen Lenkerebene und der radführende Lenker (4) einer dazu unteren Lenkerebene zugeordnet ist.

13. Radaufhängung nach einem der vorigen Ansprüche, **dadurch gekennzeichnet, dass** dieser ein Lenkmittel (9) zugeordnet ist, das vorzugsweise hinter der Radmitte (23) gelenkig mit dem Radträger (3) verbunden ist.

14. Radaufhängung nach Anspruch 14, **dadurch gekennzeichnet, dass** das Lenkmittel als Spurlenker (9) ausgebildet ist, der sich zur aktiven Lenkung über einen Aktor betätigen lässt.

15. Radaufhängung nach Anspruch 14, **dadurch gekennzeichnet, dass** das Lenkmittel als Spurstange zur passiven Lenkung über den Radhub ausgebildet ist.

## Claims

1. Wheel suspension (1) for a motor vehicle, having a wheel carrier (3) which is mounted in a pivotably movable manner with respect to a wheel-guiding link (4) by virtue of the wheel carrier (3) being directly connected to the wheel-guiding link (4) in a first connecting region (19) and being indirectly connected in a second connecting region via an integral link (5, 15, 16), wherein the wheel-guiding link (4) comprises a longitudinal link region (4a) with a front body-side bearing (11) and a transverse link region (4b) with a rear body-side bearing (12), wherein the rear body-side bearing (12) is oriented axially parallel to an axis of rotation (20) of the wheel-guiding link (4) that extends through the body-side bearings (11, 12), **characterized in that**, in a side view of the wheel suspension (1), the axes (21, 22) of the joints (15, 16) of the integral link (5) are oriented in such a way that they intersect at a point (S) situated in front of the wheel centre (23) with respect to the vehicle longitudinal direction (x).

2. Wheel suspension according to Claim 1, **characterized in that** the wheel-guiding link (4) is designed to be substantially L-shaped by virtue of the longitudinal link region (4a) forming the longer leg and the transverse link region (4b) forming the shorter leg of an "L".

3. Wheel suspension according to Claim 1 or 2, **characterized in that** the rear body-side bearing (12) of the wheel-guiding link (4) is arranged closer to the vehicle centre with respect to a vehicle transverse direction (y) than the front body-side bearing (11), with the result that the axis of rotation (20) of the wheel-guiding link (4) is inclined by an angle (α) with respect to the vehicle longitudinal direction (x).

4. Wheel suspension according to one of the preceding claims, **characterized in that** at least the rear body-side bearing (12), preferably also the front body-side bearing (11), is configured as an elastomer bearing.

5. Wheel suspension according to one of the preceding claims, **characterized in that** the wheel-guiding link (4) is attached to an axle carrier (2) by the rear body-side bearing (12) and to a vehicle bodyshell by the front body-side bearing (11).

6. Wheel suspension according to one of the preceding claims, **characterized in that** the transverse link region (4b) of the wheel-guiding link (4) has a considerably higher elasticity with respect to the vehicle longitudinal direction (x) than in the vehicle vertical direction (z) or vehicle transverse direction (y).

7. Wheel suspension according to one of the preceding claims, **characterized in that** the two connecting regions (19; 5, 15, 16) are spaced apart from one another in the vehicle longitudinal direction (x), wherein preferably one of the connecting regions is formed in front of the wheel centre (23) and the other behind the wheel centre (23) .

8. Wheel suspension according to one of the preceding claims, **characterized in that**, in the non-deflected state of the wheel carrier (3), the integral link (5) extends substantially in the vehicle vertical direction (z).

9. Wheel suspension according to one of the preceding claims, **characterized in that** the integral link (5) is connected at one end to the wheel carrier (3) via a joint (15) and at the other end to the wheel-guiding link (4) via a joint (16).

10. Wheel suspension according to one of the preceding claims, **characterized in that**, in a plan view of the wheel suspension (1), the axes (21, 22) of the joints (15, 16) of the integral link (5) are oriented approximately parallel to the axis of rotation (20) of the wheel-guiding link (4).

11. Wheel suspension according to one of the preceding claims, **characterized in that**, in a side view of the wheel suspension (1), the axis (22) of the link-side joint (16) of the integral link (5) is oriented approximately parallel to the axis of rotation (20) of the wheel-guiding link (4).

12. Wheel suspension according to one of the preceding claims, **characterized in that** the wheel carrier (3) is additionally connected to the axle carrier (2) and/or the bodyshell via a camber link (8), wherein the camber link (8) is assigned to an upper link plane and the wheel-guiding link (4) is assigned to a lower link plane.

13. Wheel suspension according to one of the preceding claims, **characterized in that** it is assigned a steering means (9) which is preferably articulatedly connected to the wheel carrier (3) behind the wheel centre (23).

14. Wheel suspension according to Claim 14, **characterized in that** the steering means is designed as a toe link (9) which can be actuated via an actuator for active steering.

15. Wheel suspension according to Claim 14, **characterized in that** the steering means is designed as a track rod for passive steering via the wheel hub.

## Revendications

1. Suspension de roue (1) destinée à un véhicule automobile, ladite suspension de roue comprenant un support de roue (3) qui est monté de manière pivotante par rapport au bras de guidage de roue (4) car le support de roue (3) est relié, directement dans une première région de liaison (19) et indirectement par le biais d'une liaison intégrée (5, 15, 16) dans une deuxième région de liaison, au bras de guidage de roue (4), le bras de guidage de roue (4) comprenant une région de bras longitudinale (4a) pourvue d'un palier avant côté carrosserie (11) et une région de bras transversale (4b) pourvue d'un palier arrière côté carrosserie (12), le palier arrière côté carrosserie (12) étant orienté axialement parallèlement à un axe de rotation (20) du bras de guidage de roue (4) qui s'étant à travers les paliers côté carrosserie (11, 12), **caractérisée en ce que** les axes (21, 22) des articulations (15, 16) du bras intégré (5) sont orientés en vue de côté sur la suspension de roue (1) de manière à se couper en un point (S) situé en avant du centre (23) de la roue par rapport à la direction longitudinale (x) du véhicule.

2. Suspension de roue selon la revendication 1, **caractérisée en ce que** le bras de guidage de roue (4) est conçu sensiblement sous la forme d'un L du fait que la région de bras longitudinale (4a) forme la branche la plus longue du « L » et la région de bras transversale (4b) forme la branche la plus courte du « L ».

3. Suspension de roue selon la revendication 1 ou 2, **caractérisée en ce que** le palier arrière côté carrosserie (12) du bras de guidage de roue (4) est disposé plus près du centre du véhicule que le palier avant côté carrosserie (11), par référence à la direction transversale (y) du véhicule de sorte que l'axe de rotation (20) du bras de guidage de roue (4) est incliné d'un angle (α) par rapport à la direction longitudinale (x) du véhicule.

4. Suspension de roue selon l'une des revendications précédentes, **caractérisée en ce qu'**au moins le palier arrière côté carrosserie (12), de préférence également le palier avant côté carrosserie (11), est conçu sous la forme d'un palier en élastomère.

5. Suspension de roue selon l'une des revendications précédentes, **caractérisée en ce que** le bras de guidage de roue (4) est relié à un support d'axe (2) par le biais du palier arrière côté carrosserie (12) et est relié à une carrosserie de véhicule par le biais du palier avant côté carrosserie (11).

6. Suspension de roue selon l'une des revendications précédentes, **caractérisée en ce que** la région de liaison transversale (4b) du bras de guidage de roue (4) présente une élasticité dans la direction longitudinale (x) du véhicule qui est nettement supérieure à celle dans la direction verticale (z) ou transversale (y) du véhicule.

7. Suspension de roue selon l'une des revendications précédentes, **caractérisée en ce que** les deux régions de liaison (19 ; 5, 15, 16) sont espacées l'une de l'autre dans la direction longitudinale (x) du véhicule, de préférence l'une des régions de liaison étant conçue en avant du centre (23) de la roue et l'autre étant conçue en arrière du centre (23) de la roue.

8. Suspension de roue selon l'une des revendications précédentes, **caractérisée en ce que** le bras intégré (5) s'étend, à l'état non dévié du support de roue (3), sensiblement dans la direction verticale (z) du véhicule.

9. Suspension de roue selon l'une des revendications précédentes, **caractérisée en ce que** le bras intégré (5) est relié par une articulation (15) au support de roue (3) et par une articulation (16) au bras de guidage de roue (4).

10. Suspension de roue selon l'une des revendications précédentes, **caractérisée en ce que** les axes (21, 22) des articulations (15, 16) du bras intégré (5) sont orientés en vue de dessus sur la suspension de roue (1) à peu près parallèlement à l'axe de rotation (20) du bras de guidage de roue (4).

11. Suspension de roue selon l'une des revendications précédentes, **caractérisée en ce que** l'axe (22) de l'articulation côté bras (16) du bras intégré (5) est orienté en vue de côté sur la suspension de roue (1) à peu près parallèlement à l'axe de rotation (20) du bras de guidage de roue (4) .

12. Suspension de roue selon l'une des revendications précédentes, **caractérisée en ce que** le support de roue (3) est en outre relié par un bras de carrossage (8) au support d'axe (2) et/ou à la carrosserie, le bras de carrossage (8) étant associé à un plan de bras supérieur et la bras de guidage de roue (4) étant associé à un plan de bras inférieur.

13. Suspension de roue selon l'une des revendications précédentes, **caractérisée en ce qu'**elle est associée à un moyen de direction (9) qui est de préférence relié en arrière du centre (23) de la roue en étant articulé au support de roue (3).

14. Suspension de roue selon la revendication 14, **caractérisée en ce que** le moyen de direction est conçu comme un bras de fusée (9) qui peut être actionné pour effectuer une direction active par le biais d'un actionneur.

15. Suspension de roue selon la revendication 14, **caractérisée en ce que** le moyen de direction est conçu comme une fusée destinée à effectuer une direction passive par le biais du moyeu de roue.
